# FASCICULE DE BREVET EUROPEEN

(11) **EP 0 818 168 B1**
(45) Date de publication et mention de la délivrance du brevet: **10.10.2001**
(21) Numéro de dépôt: 97401617.2
(22) Date de dépôt: 07.07.1997
(51) Int. Cl.: A47J 37/06

(54) **Appareil de cuisson comportant une plaque et un récipient de cuisson**
Kochgerät, ausgerüstet mit Bratplatte und einem Kochgefaess
Cooking implement comprising a cooking plate and a cooking vessel

(30) Priorité: 11.07.1996 FR 9608693
(43) Date de publication de la demande: 14.01.1998
(73) Titulaire: SEB S.A., 69130 Ecully (FR)
(72) Inventeur: Houin, Guy, 74150 Rumilly (FR); Guerrier, Didier, 74150 Bloye (FR)
(74) Mandataire: Keib, Gérard

(56) Documents cités:
- EP-A- 0 151 894
- CH-A- 455 197
- CH-A- 609 854
- FR-A- 2 704 306
- GB-A- 2 080 097
- US-A- 4 516 485

## Description

La présente invention concerne un appareil de cuisson comportant une plaque de cuisson disposée au-dessus d'éléments chauffants pour griller des aliments, notamment de la viande.

Un tel appareil de cuisson, formant gril ou barbecue, n'a cependant qu'une seule fonction de cuisson, c'est-à-dire qu'il permet uniquement de cuire et griller des aliments disposés sur la plaque de cuisson supérieure.

Ce type d'appareil de cuisson est notamment décrit dans le brevet français FR 2 704 306 au nom de la demanderesse. De manière connue, la plaque de cuisson comporte des ouvertures pour permettre le passage des graisses et des jus de cuisson qui sont récoltés dans un récipient disposé sensiblement au droit des ouvertures de la plaque.

Le récipient de collecte, les éléments chauffants et la plaque de cuisson sont ainsi superposés sur le socle de l'appareil.

Cet appareil est prévu pour être utilisé soit à l'intérieur, soit à l'extérieur, et pour permettre à chaque convive de réaliser sa propre cuisson des aliments. Eventuellement, l'appareil de cuisson peut être placé directement au centre d'une table.

Cependant, il est fréquent de prévoir des accompagnements (légumes, sauces,...), pour compléter le repas réalisé à partir des aliments grillés sur la plaque de cuisson. Il est alors nécessaire d'utiliser d'autres appareils de cuisson, ou d'encombrer la table avec d'autres récipients contenant les accompagnements.

Plusieurs appareils de cuisson connus permettent la réalisation simultanée de différents modes de cuisson des aliments, en particulier par une disposition étagée de différents récipients ou plaques de cuisson.

Le document US-A-4 516 485 décrit un appareil de cuisson, notamment de hot-dogs, comprenant une plaque de cuisson surmontée d'une grille mobile adaptée à maintenir les hot-dogs et à faire rouler ceux-ci sur la plaque de cuisson. Des éléments chauffants sont disposés sous la plaque de cuisson et un tiroir est prévu sous la plaque de cuisson et les éléments chauffants pour garder au chaud des aliments. Cet appareil est dépourvu de récipient pour collecter les graisses de cuisson, les éventuels graisses et jus de cuisson tombant directement sur le sol, à une extrémité de la plaque de cuisson disposée en pan incliné.

Le document GB-A-2 080 097 décrit un appareil de cuisson de table comprenant une plaque de cuisson supérieure, une résistance électrique disposée sous la plaque et une base formant récipient de cuisson inférieur. Mais, pas plus que dans le document précédent, il n'est prévu de récipient spécifique pour la collecte des graisses et jus de cuisson.

On connaît par le document CH-A-455 197 un appareil de cuisson permettant, également par une disposition étagée, la cuisson simultanée de divers aliments, alors qu'un récipient est prévu pour la collecte des graisses et jus de citron. Plus précisément, l'appareil comprend une plaque de cuisson disposée au-dessus d'éléments chauffants fixés à un bâti et pourvue de nervures débouchant vers une dépression de collecte des graisses et jus de cuisson attenant à l'un des côtés de la plaque de cuisson. Cette combinaison entre la plaque de cuisson et une cuvette de collecte des jus solidaire de la plaque de cuisson se traduit par une disposition de ladite cuvette de collecte dans le plan des éléments chauffants, ce plan étant sensiblement parallèle à la plaque de cuisson. L'espace libre compris entre ledit plan et la base de l'appareil permet de loger une autre plaque de cuisson, sous les éléments chauffants.

Dans cet appareil connu, les plaques de cuisson étagées, susceptibles de bénéficier simultanément de la chaleur des éléments chauffants, sont ici encore au nombre de deux. Toutefois, aucune solution pour un agencement de ce type n'est envisagée avec un récipient de collecte des graisses et jus de cuisson indépendant de toute plaque de cuisson, autrement dit occupant sensiblement l'espace d'un récipient de cuisson supplémentaire.

L'utilisation simultanée de trois plaques ou récipients superposés pose à l'évidence le problème de l'efficacité des éléments chauffants.

La présente invention se propose néanmoins la réalisation d'un appareil de cuisson qui permette l'utilisation simultanée d'une plaque et d'un récipient de cuisson, la plaque de cuisson étant associée fonctionnellement mais non pas nécessairement structurellement à un récipient de collecte des graisses et jus de cuisson.

L'appareil de cuisson visé par l'invention comporte ainsi de manière connue une plaque de cuisson disposée au-dessus d'éléments chauffants fixés à un bâti, et un récipient de collecte des graisses et jus de cuisson, ledit récipient de collecte et les éléments chauffants s'étendant sensiblement dans un même plan, sensiblement parallèle à la plaque de cuisson, l'espace libre compris entre ledit plan et la base de l'appareil logeant un récipient de cuisson sous les éléments chauffants.

Selon l'invention, cet appareil de cuisson est caractérisé en ce que ladite plaque de cuisson comportant une ou plusieurs ouvertures de passage des graisses de cuisson, le récipient de collecte des graisses et jus de cuisson est disposé sensiblement au droit de la ou des ouvertures de la plaque de cuisson, et en ce que les éléments chauffants s'étendent à proximité et parallèlement à deux bords opposés de la plaque de cuisson, le récipient de collecte étant disposé entre les éléments chauffants.

Ainsi, les éléments chauffants permettent à la fois de chauffer la plaque de cuisson pour griller les aliments et de cuire les aliments disposés dans le récipient de cuisson sous les éléments chauffants.

Bien qu'on soit dissuadé de rapprocher le récipient de collecte des éléments chauffants, la demanderesse a constaté que la disposition du récipient de collecte dans un même plan contenant les éléments chauffants et entre ceux-ci, n'augmente pas de manière significative la combustion des graisses et le dégagement de fumée, notamment lorsqu'une quantité d'eau de refroidissement suffisante est versée dans le récipient de collecte.

L'espace libéré ainsi entre la base de l'appareil et les éléments chauffants, peut être utilisé pour disposer le récipient de cuisson permettant de cuire ou maintenir au chaud des aliments, tels que légumes, sauces, ...

Cet appareil de cuisson permet donc de réaliser un repas complet, éventuellement directement sur une table entourée de convives.

Selon une version avantageuse de l'invention, la plaque de cuisson et le récipient de collecte sont posés de manière amovible sur le bâti, le récipient de cuisson étant monté en coulissement sous la plaque de cuisson.

Cette disposition permet d'introduire et de retirer le récipient de cuisson, indépendamment de la plaque et du récipient de collecte des graisses.

Selon une version préférée de l'invention, la base de l'appareil comprend des éléments chauffants additionnels adaptés à chauffer le récipient de cuisson.

Ce dernier est ainsi à la fois réchauffé en partie supérieure par des éléments de cuisson disposés sous la plaque de cuisson et en partie inférieure par des éléments chauffants additionnels disposés dans la base de l'appareil.

D'autres particularités et avantages de l'invention apparaîtront encore dans la description ci-après.

Aux dessins annexés, donnés à titre d'exemples non limitatifs :
- la figure 1 est une vue en perspective de l'appareil de cuisson conforme à l'invention;
- la figure 2 est une vue en coupe selon la ligne II-II à la figure 1.

Comme illustré aux figures, l'appareil de cuisson comporte une plaque de cuisson 1 disposée au-dessus d'éléments chauffants 2, fixés à un bâti 3. Dans cet exemple les éléments chauffants sont des résistances électriques dont l'alimentation en courant électrique est réalisée par l'intermédiaire d'une prise de connexion 4, sur laquelle peut être branché un cordon d'alimentation électrique amovible (non représenté).

La plaque de cuisson 1 comporte des ouvertures 5 permettant le passage des graisses et jus de cuisson s'écoulant des aliments 6 qui sont grillés sur la plaque de cuisson.

Dans cet exemple, la plaque 1 comporte une série d'orifices 5 identiques et répartis régulièrement suivant une direction longitudinale de la plaque 1.

Un récipient de collecte 7 est disposé sensiblement au droit des ouvertures de la plaque de cuisson.

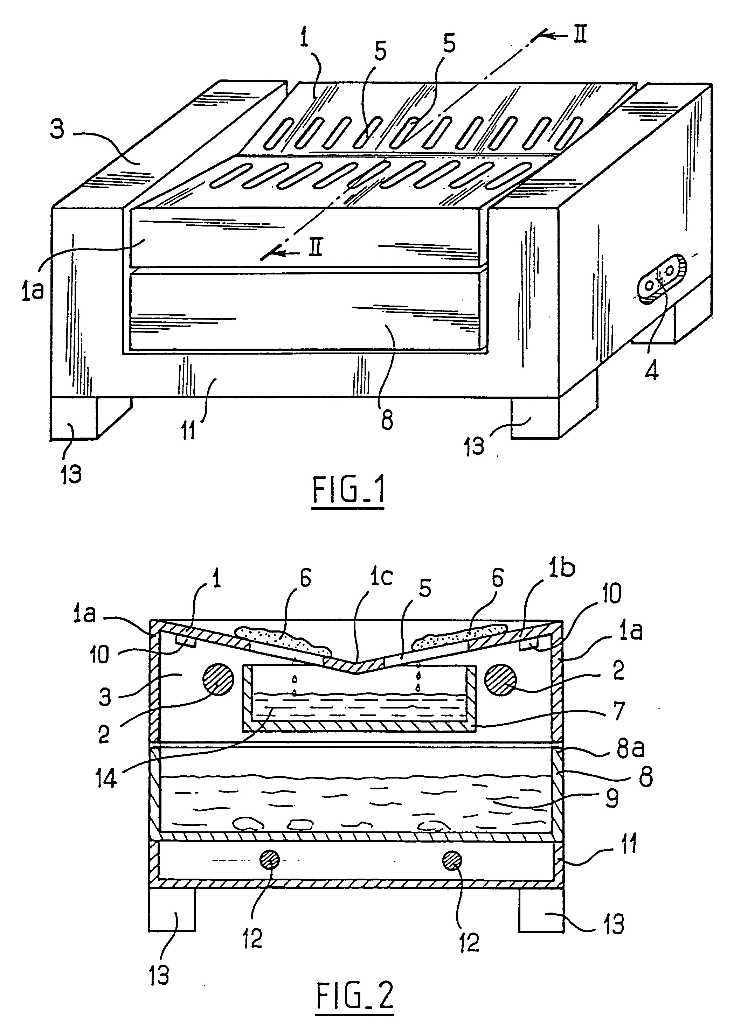

Comme bien illustré à la figure 2, le récipient de collecte 7 et les éléments chauffants 2, s'étendent sensiblement dans un même plan, parallèle à la plaque de cuisson 1 et sous cette plaque.

L'espace libre compris entre ce plan et la base de l'appareil est adapté à loger un récipient de cuisson 8, sous les éléments chauffants 2. Des aliments 9, tels que légumes, sauces, peuvent ainsi être cuits dans le récipient de cuisson 8, grâce aux éléments chauffants 2.

Dans cet exemple, la plaque de cuisson 1 et le récipient de collecte 7 sont posés de manière amovible sur le bâti 3. Des épaulements 10, disposés sur des côtés opposés du bâti 3, permettent de supporter la plaque de cuisson sur le bâti 3. Un système analogue peut également être prévu pour supporter le récipient de collecte 7.

Le récipient de cuisson 8 est monté en coulissement sous la plaque de cuisson 1, dans l'espace ménagé entre le récipient de collecte 7 et la base 11 du bâti 3 de l'appareil.

A titre de variante, la plaque de cuisson 1 et le récipient de collecte 7 pourraient également être posés de manière amovible sur le récipient de cuisson 8.

De préférence, la base 11 de l'appareil comprend des éléments chauffants additionnels 12 adaptés à chauffer le récipient de cuisson 8. Ces éléments chauffants additionnels 12 peuvent également être des résistances électriques chauffantes.

Le récipient de cuisson 8 est ainsi à la fois chauffé par les éléments chauffants 2, situés en partie supérieure de l'appareil et par les éléments chauffants 12, situés en partie inférieure.

Les éléments chauffants 2 s'étendent à proximité et parallèlement à deux bords opposés 1a de la plaque de cuisson 1, le récipient de collecte 7 étant disposé entre les éléments chauffants 2.

Les bords opposés 1a s'étendent de préférence suivant la plus grande longueur de la plaque de cuisson 1.

Cette disposition des éléments chauffants 2 permet d'obtenir une bonne répartition de la température de la plaque de cuisson 1.

Cette dernière comprend une face supérieure 1b adaptée à recevoir des aliments 6, cette face supérieure 1b ayant au moins une portion inclinée, la zone la plus basse de cette portion inclinée correspondant à une région de la plaque de cuisson 1 pourvue d'ouvertures 5, disposée au droit du récipient de collecte 7.

Ainsi, les jus et graisses de cuisson s'écoulant des aliments 6 sont entraînés, grâce au pan incliné formé par la face supérieure 1b de la plaque de cuisson 1, vers une zone pourvue d'ouvertures 5, de manière à traverser ces ouvertures 5 et à être réceptionnés dans le récipient de collecte 7. Ce dernier est de préférence rempli d'eau 14 afin d'éviter la recombustion des jus et graisses récoltés.

Dans cet exemple, la plaque de cuisson comprend une face supérieure 1b constituée de deux portions inclinées adjacentes en leur zone la plus basse 1c.

La face supérieure 1b de la plaque de cuisson présente ainsi une section transversale, dans sa largeur, en forme de V.

Les ouvertures 5 sont situées dans la zone définie par la pointe du V, le récipient de collecte 7 s'étendant dans la longueur de la plaque de cuisson 1, en son centre.

De préférence les bords 1a de la plaque de cuisson 1 s'étendent vers le bas, en direction de la base 11 de l'appareil, de manière à former une jupe entourant et protégeant les éléments chauffants 2 et le récipient de collecte 7.

Ces bords 1a formant jupe ont une extrémité inférieure qui est presque en contact avec les bords supérieurs 8a du récipient de cuisson 8, de manière à former un espace sensiblement fermé au-dessus du récipient de cuisson 8. Cette disposition permet de confiner la chaleur sous la plaque de cuisson 1 et d'accélérer la cuisson des aliments 9 dans le récipient de cuisson 8.

Le récipient de cuisson 8 peut être compartimenté, de sorte que peuvent être maintenus au chaud ou cuits séparément différents types d'accompagnements.

Ce récipient 8 pourrait également être remplacé par plusieurs récipients adjacents.

Bien entendu, de nombreuses modifications pourraient être apportées à l'exemple décrit ci-dessus sans sortir du cadre de l'invention.

Les éléments chauffants 2 peuvent également être des rampes de gaz.

Dans ces exemples, les pieds 13 de l'appareil de cuisson sont de petites dimensions et permettent de poser celui-ci sur une table entourée de convives.

Bien entendu, ces pieds 13 pourraient être remplacés par un socle de plus grande dimension adapté à supporter l'appareil directement sur le sol.

## Revendications

1. Appareil de cuisson comportant une plaque de cuisson (1) disposée au-dessus d'éléments chauffants (2) fixés à un bâti (3), et un récipient de collecte (7) des graisses et jus de cuisson, ledit récipient de collecte (7) et les éléments chauffants (2) s'étendant sensiblement dans un même plan, sensiblement parallèle à la plaque de cuisson (1), l'espace libre compris entre ledit plan et la base (11) de l'appareil logeant un récipient de cuisson (8) sous les éléments chauffants (2), **caractérisé en ce que** ladite plaque de cuisson (1) comportant une ou plusieurs ouvertures (5) de passage des graisses de cuisson, le récipient de collecte (7) des graisses et jus de cuisson est disposé sensiblement au droit de la ou des ouvertures (5) de la plaque de cuisson (1), et **en ce que** les éléments chauffants s'étendent à proximité et parallèlement à deux bords opposés (la) de la plaque de cuisson (1), le récipient de collecte (7) étant disposé entre les éléments chauffants (2).

2. Appareil de cuisson conforme à la revendication 1, **caractérisé en ce que** lesdits bords (la) de la plaque (1) s'étendent suivant la plus grande longueur de la plaque de cuisson (1).

3. Appareil de cuisson conforme à l'une des revendications 1 ou 2, **caractérisé en ce que** la plaque de cuisson (1) et le récipient de collecte (7) sont posés de manière amovible sur le bâti (3), le récipient de cuisson (8) étant monté en coulissement sous la plaque de cuisson (1).

4. Appareil de cuisson conforme à l'une des revendications 1 ou 2, **caractérisé en ce que** la plaque de cuisson (1) et le récipient de collecte (7) sont posés de manière amovible sur le récipient de cuisson (8).

5. Appareil de cuisson conforme à l'une des revendications 1 à 4, **caractérisé en ce que** la base (12) de l'appareil comprend des éléments chauffants additionnels (12) adaptés à chauffer le récipient de cuisson (8) .

6. Appareil de cuisson conforme à l'une des revendications 1 à 5, **caractérisé en ce que** la plaque de cuisson comprend une face supérieure (1b) adaptée à recevoir des aliments (6), ladite face supérieure (1b) ayant au moins une portion inclinée, la zone la plus basse de ladite portion inclinée correspondant à une région de la plaque de cuisson (1) pourvue d'ouvertures (5), disposée au droit d'un récipient de collecte (7) des graisses et jus de cuisson.

7. Appareil de cuisson conforme à l'une des revendications 1 à 6, **caractérisé en ce que** la plaque de cuisson (1) comprend une face supérieure (1b) constituée de deux portions inclinées (1b) adjacentes en leur zone la plus basse (1c).

## Patentansprüche

1. Kochvorrichtung mit einer über, an einem Tragelement (3) befestigten Heizelementen (2) angeordneten Kochplatte (1) und einem Fett- und Bratsaft-Sammelbehälter (7), wobei der Sammelbehälter (7) und die Heizelemente (2) sich im wesentlichen in einer gleichen, zu der Kochplatte (1) im wesentlichen parallel verlaufenden Ebene erstrecken, wobei in dem, sich zwischen der Ebene und dem Basiselement (11) der Vorrichtung befindenden, freien Raum ein Kochbehälter (8) unter den Heizelementen (2) angeordnet ist, **dadurch gekennzeichnet, daß** die Kochplatte (1) eine oder mehrere Bratfett-Durchgangsöffnungen (5) aufweist, wobei der Fett- und Bratsaft-Sammelbehälter (7) im wesentlichen senkrecht unter der oder den Öffnungen (5) der Kochplatte (1) angeordnet ist, und daß die Heizelemente sich in der Nähe und parallel zu zwei gegenüberliegenden Rändern (1a) der Kochplatte (1) erstrecken, wobei der Sammelbehälter (7) zwischen den Heizelementen (2) angeordnet ist.

2. Kochvorrichtung nach Anspruch 1, **dadurch gekennzeichnet daß** die Ränder (1a) der Platte (1) sich entlang der größten Länge der Kochplatte (1) erstrecken.

3. Kochvorrichtung nach einem der Ansprüche 1 oder 2, **dadurch gekennzeichnet, daß** die Kochplatte (1) und der Sammelbehälter (7) in abnehmbarer Weise auf dem Tragelement (3) angeordnet sind, wobei der Kochbehälter (8) in Gleitführung unter der Kochplatte (1) angebracht ist.

4. Kochvorrichtung nach einem der Ansprüche 1 oder 2, **dadurch gekennzeichnet, daß** die Kochplatte (1) und der Sammelbehälter (7) in abnehmbarer Weise über dem Kochbehälter (8) angeordnet sind.

5. Kochvorrichtung nach einem der Ansprüche 1 bis 4, **dadurch gekennzeichnet, daß** das Basiselement (12) der Vorrichtung zusätzliche Heizelemente (12) umfaßt, die zum Erhitzen des Kochbehälters (8) ausgelegt sind.

6. Kochvorrichtung nach einem der Ansprüche 1 bis 5, **dadurch gekennzeichnet, daß** die Kochplatte eine obere Fläche (1b) umfaßt, die zum Aufnehmen von Nahrungsmitteln (6) ausgelegt ist, wobei die obere Fläche (1b) mindestens einen geneigten Bereich aufweist, wobei die tiefste Zone des geneigten Bereichs einem Bereich der Kochplatte (1) entspricht, die mit Öffnungen (5) versehen ist, der senkrecht über einem Fett- und Bratsaft-Sammelbehälter (7) angeordnet ist.

7. Kochvorrichtung nach einem der Ansprüche 1 bis 6, **dadurch gekennzeichnet, daß** die Kochplatte (1) eine obere Fläche (1b) umfaßt, die aus zwei geneigten Bereichen (1b) gebildet ist, die in ihrer tiefsten Zone (1c) benachbart sind.

## Claims

1. Cooking apparatus comprising a cooking plate (1) situated above heating means (2) which are fixed to a frame (3), and a vessel (7) for collecting the cooking fats and juices, the said collecting vessel (7) and the heating means (2) lying in roughly the same plane as each other, roughly parallel to the cooking plate (1), the unoccupied space between the said plane and the base (11) of the apparatus housing a cooking vessel (8) underneath the heating means (2), which apparatus is **characterized in that**, the said cooking plate (1) comprising one or more openings (5) for the cooking fats to pass through, the vessel (7) for collecting the cooking fats and juices is more or less aligned with the opening or openings (5) in the cooking plate (1), and **in that** the heating means extend in the vicinity of and parallel to two opposite edges (1a) of the cooking plate (1), the collecting vessel (7) being situated between the heating means (2).

2. Cooking apparatus according to Claim 1, **characterized in that** the said edges (1a) of the plate (1) extend along the greater length of the cooking plate (1).

3. Cooking apparatus according to either of Claims 1 and 2, **characterized in that** the cooking plate (1) and the collecting vessel (7) are stood removably on the frame (3), the cooking vessel (8) being mounted slidably underneath the cooking plate (1).

4. Cooking apparatus according to either of Claims 1 and 2, **characterized in that** the cooking plate (1) and the collecting vessel (7) are stood removably on top of the cooking vessel (8).

5. Cooking apparatus according to one of Claims 1 to 4, **characterized in that** the base (12) of the apparatus comprises additional heating means (12) suitable for heating the cooking vessel (8).

6. Cooking apparatus according to one of Claims 1 to 5, **characterized in that** the cooking plate comprises an upper face (1b) suitable for holding food (6), the said upper face (1b) having at least one inclined portion, and the lowest area of the said inclined portion corresponds to a region of the cooking plate (1) containing openings (5), and is aligned with a vessel (7) for collecting the cooking fats and juices.

7. Cooking apparatus according to one of Claims 1 to 6, **characterized in that** the cooking plate (1) comprises an upper face (1b) consisting of two inclined portions (1b) which are adjacent in their lowest area (1c).
